# EUROPEAN PATENT APPLICATION

(11) **EP 3 351 835 A1**
(43) Date of publication of application: **25.07.2018**
(21) Application number: 18152280.6
(22) Date of filing: 18.01.2018
(51) Int. Cl.: F16K 5/06, F16K 15/18, F16K 27/06

(54) **ANTI-POLLUTION CHECK VALVE DEVICE**

(30) Priority: 19.01.2017 IT 201700005877
(71) Applicant: Caleffi S.p.A., 28010 Fontaneto d'Agogna, Novara (IT)
(72) Inventor: CALEFFI, Marco, 28010 Fontaneto d'Agogna (IT)
(74) Representative: Siniscalco, Fabio

(57) **Abstract**

A check valve device (10) provides a valve body (11) in an inner seat of which a ball shutter (15) is rotatably sealingly received and in which a check valve (37) is also provided that prevents backflow from an outlet (13) to an inlet (12) of the valve body (11); the check valve (37) is received in the shutter (15); in the closed position of the shutter (15) a passage is formed for the leak of fluid from the outlet (13) to a zone (14V) of the inner seat downstream of the check valve (37); the valve device (10) is further provided with a closable access (24-26) at the shutter (15) to access the shutter (15) and check the operation of the check valve (37) in the closed position and replace the check valve (37) in a further position of the shutter (15). A compact valve device is thus obtained that permits the aforesaid checking and replacement functions without the use of further valves.

## Description

### BACKGROUND OF THE INVENTION

The object of this invention is an anti-pollution check valve device, in particular for protecting water distribution plants.

### PRIOR ART

Anti-pollution check valve devices are known that are applied to water distribution plants to prevent the backflow of polluted water into the water supply network.

This phenomenon of backflow of polluted water can occur because of pressure variations in the distribution network that create a flow reversal.

The check valve device is installed between the public network and the user's network and avoids contact between the waters contained in the two networks, closing automatically when flow reversal conditions occur.

Known check valve devices provide a valve body in which a ball shutter operates that is externally controllable, that permits the flow of fluid to be regulated between an inlet and an outlet of the device; inside the valve body a check valve is also provided that prevents a backflow from the outlet to the inlet if flow reversal conditions occur.

These known check valve devices are inspectable inside to check the correct operation thereof.

One drawback of this type of known check valve device is that it is relatively bulky and thus has applicability limits.

Another drawback is that the inner check valve is not easily replaceable in the event of a fault and thus makes it necessary to replace the entire valve device.

A further drawback is that it is necessary to provide a ball valve upstream of the valve device in order to make checks and replacements.

### OBJECT OF THE INVENTION

The object of the present invention is to propose an anti-pollution check valve device that is able to overcome the aforesaid drawbacks.

### SHORT DESCRIPTION OF THE INVENTION

This object is achieved by an anti-pollution check valve device according to claim 1.

### SHORT DESCRIPTION OF THE DRAWINGS

In order to better understand the invention, a description is given below of a nonlimiting exemplary embodiment thereof, illustrated in the attached drawings in which:
fig. 1 is a perspective view of an anti-pollution check valve device according to the invention in open position;
fig. 2 is a top plan view of the valve device of fig. 1;
fig. 3 is a side view according to arrow A of fig. 2 of the valve device of fig. 1;
fig. 4 is a longitudinal section side view of the valve device of fig. 1 to which a gauge is fitted;
fig. 5 is a longitudinal section bottom plan view of the valve device of fig. 4;
figs 6,7,8 are respectively two different perspective views and a section view of a component of the valve device of fig. 1;
fig. 9 is a top plan view of the valve device of fig.4 in closed position;
fig. 10 is a longitudinal section side view of the valve device in the closed position of fig.9;
fig. 11 is a longitudinal section bottom plan view of the valve device in the closed position of fig. 9;
fig. 12 is a top plan view of the valve device of fig. 4 in a position of replacing a component;
fig. 13 is a longitudinal section side view of the valve device in the replacement position of fig. 12;
fig. 14 is a longitudinal section bottom plan view of the valve device in the replacement position of fig. 12.

### DETAILED DESCRIPTION OF THE INVENTION

The illustrated anti-pollution check valve device is indicated generally by 10.

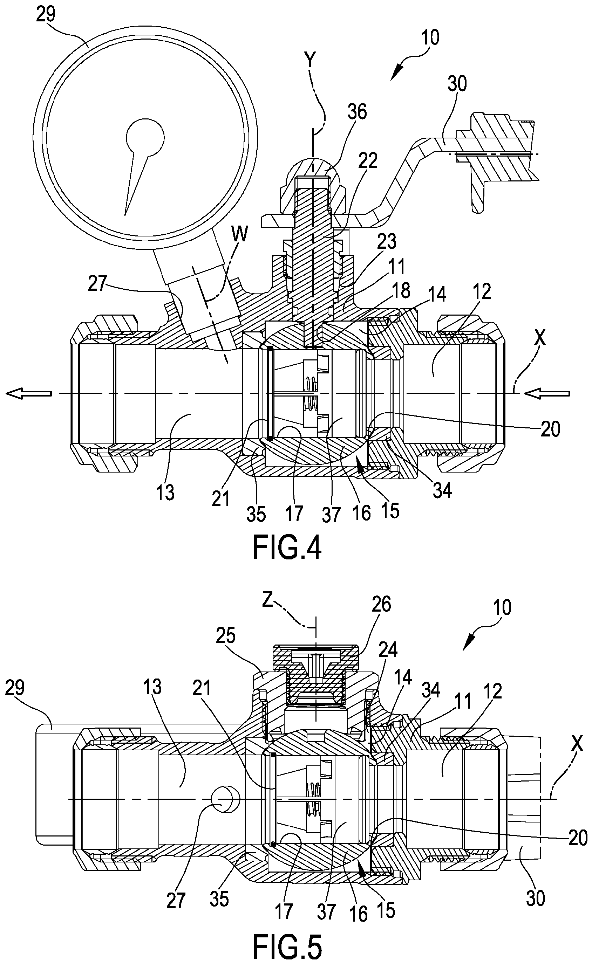

With reference to figs 4,5, the device 10 comprises a valve body 11 in which a fluid inlet conduit 12 and a fluid outlet conduit 13, arranged along an axis X, are obtained.

In the valve body 11, between the inlet conduit 12 and the outlet conduit 13 a valve seat 14 is obtained in which a ball shutter 15 is sealingly received rotatably around an axis Y, perpendicular to the axis X. The seal is provided by two annular sealing gaskets of diameters that are different from one another that will be disclosed below.

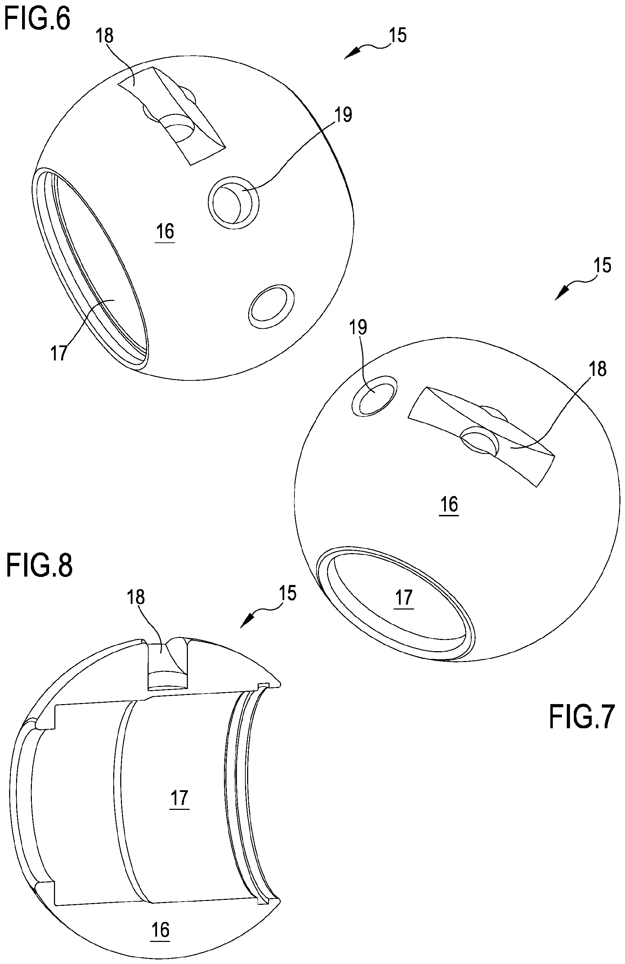

With reference to figs 6-8, the shutter 15 has a spherical body 16 in which a large through axial hole 17 is obtained. In the body 16 of the shutter 15 a groove 18 and a blind hole 19 are also obtained circumferentially near the groove 18.

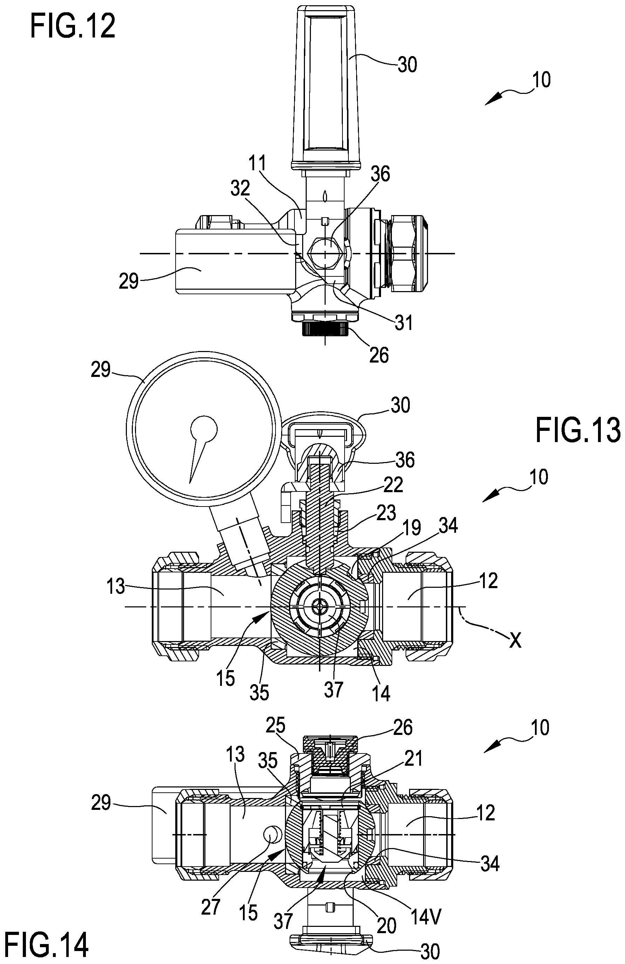

With reference to figs 4,5, in the through hole 17 of the shutter 15 a nonreturn valve in the form of a valve cartridge 37 is received that is illustrated in detail in fig. 14. This valve cartridge 37 abuts at one end of the hole 17 against an annular shoulder 20 of the body 16 of the shutter 15 and at the other end it is locked by a removable retaining ring 21.

With reference to fig. 4, the groove 18 of the body 16 of the shutter 15 is coupled with a rod 22 arranged along the axis Y, received rotatably in a through hole 23 of the valve body 11. In turn, the rod 22 is connected to an outer lever 30. By acting on the lever 30, the shutter 15 is rotated.

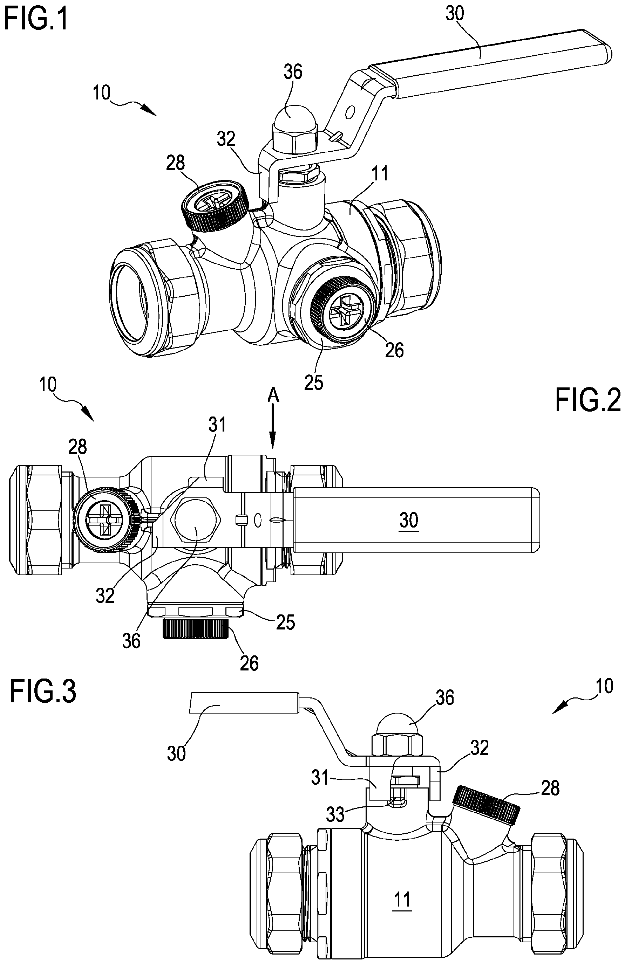

With reference to figs 1-5, the valve device 10 has two accesses to the inner part of the valve body 11. A first access is formed by a through hole 24 obtained in the valve body 11, arranged at the shutter 15 along an axis Z perpendicular to the axis X and to the axis Y, that places in communication the seat 14 of the shutter 15 with the outside; in the through hole 24 a bush 25 is sealingly screwed in which in turn a plug 26 is sealingly screwed that closes this first access. A second access is formed by a second through hole 27 obtained in the valve body 11, arranged along an axis W that is oblique to the axis X, that places in communication the outlet conduit 13 with the outside; into the through hole 27 a further plug 28 is sealingly screwed that closes this second access. In figs 4,5 the plug 28 is removed and into the through hole 27 a pressure gauge 29 is screwed to control the pressure of the outlet fluid.

The operation of the check valve device 10 disclosed above is as follows.

In figs 1-5 the valve device 10 is in open position. In this position the axis of the through hole 17 of the shutter 15 is in line with the axis X. The fluid can flow freely inside the body 11 of the valve device 10 from the inlet conduit 12 to the outlet conduit 13 in the direction indicated by the arrows in fig. 4. The valve cartridge 37 prevents fluid flow in the opposite direction from the outlet conduit 13 to the inlet conduit 12: this backflow condition occurs when the pressure in the outlet conduit 13 is greater than the pressure in the inlet conduit 12. The pressure gauge 29 enables the pressure of the fluid in the outlet conduit to be controlled.

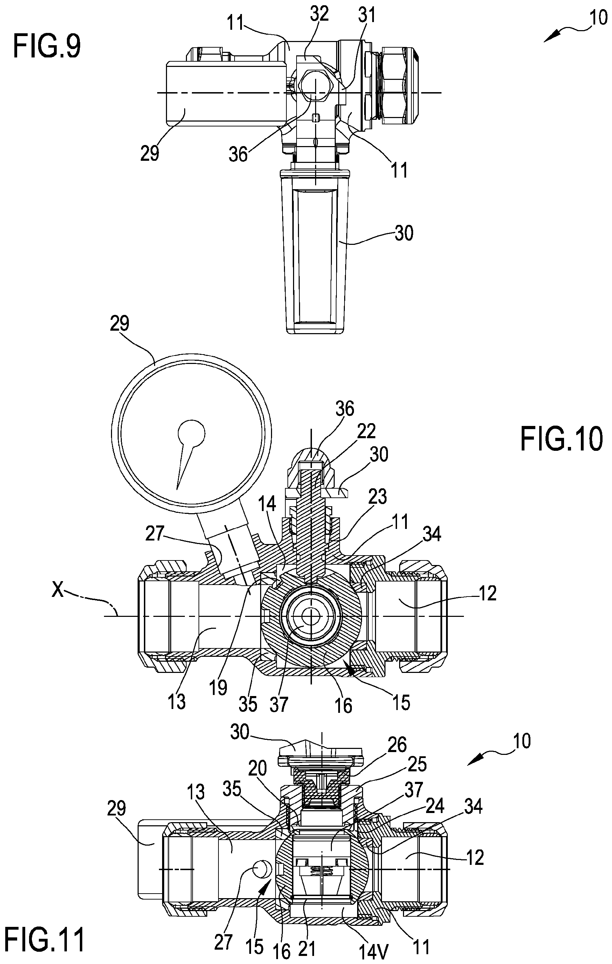

In figs 9-11 the valve device 10 is in closed position. In this position the axis of the through hole 17 of the shutter 15 is perpendicular to the axis X and the body 16 of the shutter 15 prevents fluid passage between the inlet conduit 12 and the outlet conduit 13.

The stroke of the lever 30 between the open position and the closed position is 90°. With reference to figs 1-3, to bound this stroke by 90°, the lever 30 has two extensions 31 and 32 that are suitable for abutting against a projection 33 of the valve body 11 alternatively in the aforesaid open and closed positions.

In the aforesaid closed position of the valve device 10 it is possible to check the correct operation of the valve cartridge 37. With reference to figs 10,11, it is pointed out that the seal closure of the shutter 15 is achieved through an annular sealing gasket 34 arranged in the valve seat 14 at the inlet conduit 12 and an annular sealing gasket 35, of greater diameter than the annular gasket 34, arranged in the valve seat 14 at the outlet conduit 13 in a position opposite the gasket 34. In the closed position the blind hole 19 of the shutter 15 straddles the gasket 35 so as to enable fluid to pass from the outlet conduit 13 to a zone 14V of the valve seat 14 downstream of the check valve cartridge 37. The access plug 26 is on the opposite side with respect to the aforesaid zone 14V. By removing the plug 26 it can then be checked whether there is a leak of fluid through the valve cartridge 37 and then the operation of the latter can be checked. By the pressure gauge 29, it is possible to check whether there is fluid pressure in the outlet conduit so as to be able to carry out that check.

If it is necessary to replace the valve cartridge 37, the procedure illustrated in figs 12-14 is followed. First, a fixing nut 36 of the lever 30 is adjusted by being loosened until it is possible to lift the lever 30 so as to free the extensions 31 and 32 from the projection 33. Then the lever 30 is rotated anticlockwise by 90° until the position is reached that is opposite the closed position of figs 9-11. As illustrated in fig. 14, in this position the retaining ring 21 that locks the valve cartridge 37 is at the bush 25: by thus removing the bush 25 it is possible to access the retaining ring 21, remove the retaining ring 21, and remove and replace the valve cartridge 37. As can be observed in fig. 13, the gasket 34 is in a displaced position with respect to the blind hole 19 of the shutter 15 and there can thus not be any fluid leak through the shutter 15, thus enabling the valve cartridge 37 to be replaced without problems, in dry conditions.

As the check valve is incorporated into the ball shutter, the valve device 10 is compact.

Further, the valve device 10, owing to the disclosed and illustrated technical features thereof, as seen, is inspectionable to check the correct operation thereof, and enables the check valve to be replaced.

The valve device 10 is particularly suitable for use in water distribution plants to prevent the return of polluted water into the water supply network.

The second access formed by the through hole 27 closed by the plug 28 can also be used to empty the plant to which the valve device 10 is connected.

It is clear that variations on and/or additions to what has been disclosed and illustrated can be provided.

The configuration of the various components can be different from what has been disclosed and illustrated.

The blind hole 19 can be replaced by a passage of any configuration that permits the leak disclosed above of fluid into the closed position of the valve device, to check the operation of the check valve.

## Claims

1. Check valve device (10) comprising a valve body (11) provided with an inner seat (14) in which a ball shutter (15) is sealingly received and rotatable from the outside to enable the flow of fluid from an inlet (12) to an outlet (13) of the valve body (11) to be regulated, wherein inside the valve body (11) a check valve (37) is further inserted in a removable manner that prevents the backflow from the outlet (13) to the inlet (12) of the valve body (11), **characterised in that**:
- the shutter (15) is provided with a through hole (17) in which the check valve (37) is received, in an open position of the shutter (15) the check valve (37) permitting the flow of fluid through the through hole (17) from the inlet (12) to the outlet (13) and preventing fluid flow from the outlet (13) to the inlet (12), in a closed position of the shutter (15) the communication between inlet (12) and outlet (13) being closed;
- a passage is formed in said closed position for the leak of fluid from the outlet (13) to a zone (14V) of the inner seat (14) downstream of the check valve (37);
- a closable access (24-26) is provided at the shutter (15) to access the shutter (15) and check the operation of the check valve (37) in said closed position and replace the check valve (37) in a further position of the shutter (15).

2. Valve device according to claim 1, wherein the check valve is in the form of a valve cartridge (37) fixed in the through hole (17) by means of a removable retaining ring (21).

3. Valve device according to claim 1 or 2, wherein the seal of the shutter (15) is made by two opposite annular gaskets (34,35), one (34) of which has a lesser diameter and is arranged at the inlet (12) whereas the other (35) has a greater diameter and is arranged at the outlet (13), and wherein the aforesaid leak is obtained through a blind hole (19) obtained in the outer part of the shutter (15), in said closed position of the shutter (15) the blind hole (19) of the shutter (15) straddling the gasket of greater diameter (35) so as to permit the aforesaid leak, in all the other positions of the shutter (15) the blind hole (19) being displaced with respect to the gaskets (34,35).

4. Valve device according to any preceding claim, wherein the shutter (15) is driven by an outer lever (30) and is rotatable around an axis (Y) according to an angle of 90° between the open position and the closed position, on the lever (30) and on the valve body (11) abutting elements (31-33) being provided for defining the aforesaid rotation by 90°, the lever (30) being detachable and again attachable in another position to be able to rotate the shutter (15) to a replacement position of the shutter (15).

5. Valve device according to claim 4, wherein the replacement position is rotated by 180° with respect to the closed position.

6. Valve device according to any preceding claim, wherein the closable access comprises a through hole (24), obtained in the valve body (11), that places in communication the seat (14) of the shutter (15) with the outside and is sealingly closed by a removable plug (26).

7. Valve device according to claim 6, wherein a further closable access (27,28) is provided that is arranged at the outlet (13).

8. Valve device according to claim 7, wherein the further closable access comprises a further through hole (27), obtained in the valve body (11), that places the outlet (13) in communication with the outside and is sealingly closed by a further removable plug (28).

9. Valve device according to claim 8, wherein said through hole (27) is suitable for receiving a pressure gauge (29) instead of the further plug (28).
